# EUROPÄISCHE PATENTANMELDUNG

(11) **EP 4 317 272 A1**
(43) Veröffentlichungstag der Anmeldung: **07.02.2024**
(21) Anmeldenummer: 23186210.3
(22) Anmeldetag: 18.07.2023
(51) Int. Cl.: C08J 5/18, B32B 27/06, B32B 27/12, B32B 27/18, C08J 7/04

(54) **DEKORATIVE, TIEFZIEHBARE, RECYCLEFÄHIGE, KORKGEFÜLLTE THERMOPLASTISCHE FOLIE**

(30) Priorität: 05.08.2022 DE 102022208177
(71) Anmelder: Benecke-Kaliko AG, 30419 Hannover (DE)
(72) Erfinder: Knecht, Matthias, 30165 Hannover (DE); Wagner, Klaus, 30165 Hannover (DE)
(74) Vertreter: Continental Corporation

(57) **Zusammenfassung**

Beschrieben wird eine Folie, umfassend mindestens eine Schicht, wobei die mindestens eine Schicht mindestens ein thermoplastisches Polymer und Korkpartikel umfasst, sowie Verwendungen einer solchen Folie.

## Beschreibung

Die vorliegende Erfindung betrifft eine Folie, umfassend mindestens eine Schicht, wobei die mindestens eine Schicht mindestens ein thermoplastisches Polymer und Korkpartikel umfasst, sowie Verwendungen einer solchen Folie.

Kork wird abgesehen von der Herstellung von Korken als Flaschenverschlüsse auch in vielen anderen Industrien und Anwendungen eigesetzt. So werden beispielsweise Korkmatten als Isolierung und Schalldämmung unter Fußböden verlegt, welche jedoch das Korkdesign verbergen. Diese Korkmatten bestehen meist aus Abfällen der Korkenherstellung, die in Form von Korkgranulat vorliegen, welche mit Harzen versetzt und zu Platten gepresst werden. Es sind auch Compounds, umfassend Polymere und Kork, bekannt, die in Spritzgussverfahren eingesetzt werden und aus denen beispielsweise Griffe gefertigt werden.

Es besteht zudem eine Nachfrage daran, Kork in Automobilinnenräumen einzusetzen, was jedoch bisher nur selten tatsächlich durchgeführt wird. Zweckmäßigerweise liegt der Kork zum Einsatz in einem Automobilinnenraum in Form einer Folie oder eines Mehrschichtverbundes vor, sodass damit Bauteile be- bzw. überzogen werden können.

Bekannte korkhaltige Folien oder korkhaltige Mehrschichtverbunde haben häufig die Nachteile, dass diese nicht tiefziehbar sind, und wenn sie tiefziehbar sind, gleichzeitig keine akzeptable Oberflächengüte bei Sichtbarkeit der Korkpartikel ohne dass die Korkpartikel an der Oberfläche der Folie oder des Mehrschichtverbundes vorliegen, aufweisen. Ferner neigen viele der bekannten korkhaltigen Folien oder Mehrschichtverbunde beim Tiefziehen zum Aufreißen. Zudem ist die Lichtbeständigkeit der Korkpartikel in den Folien oder Mehrschichtverbunden verbesserungsbedürftig, da die Korkpartikel zum Ausbleichen neigen. Es ist ebenfalls problematisch, wenn die Folien oder Mehrschichtverbunde bei hohen Prozesstemperaturen, insbesondere über 180°C, verarbeitet werden müssen, da dadurch die Korkpartikel verfärben.

Es besteht daher Bedarf, die bekannten Folien oder Mehrschichtverbunde zu verbessern und die vorstehend genannten Nachteile des Stands der Technik zu beheben.

Die vorliegende Erfindung befasst sich mit diesem Bedarf.

Insbesondere soll eine korkhaltige Folie, die auch Teil eines Mehrschichtverbundes sein kann, bereitgestellt werden, die tiefziehbar ist, ohne dabei an Oberflächengüte einzubüßen und ohne dass ein Aufreißen der Oberfläche befürchtet werden muss. Ferner soll die Folie und insbesondere die darin enthaltenen Korkpartikel lichtbeständig sein. Die Folie soll zudem bei möglichst niedrigen Prozesstemperaturen verarbeitbar sein, um ein Verfärben der Partikel zu verhindern. Außerdem soll die Folie wirtschaftlich herstellbar und einsatzbar und zu einem möglichst großen Teil, insbesondere vollständig, recyclingfähig sein.

Es wurde nun überraschend gefunden, dass die vorstehend genannte Aufgabe durch eine Folie gemäß Anspruch 1 gelöst wurde.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Erfindungsgemäß ist eine Folie, umfassend mindestens eine Schicht, wobei die mindestens eine Schicht mindestens ein thermoplastisches Polymer und Korkpartikel umfasst.

Die Folie kann als einzelne einschichtige Folie vorliegen oder auch Teil eines Mehrschichtverbundes sein. Innerhalb eines Mehrschichtverbundes kann die Folie prinzipiell an jeder Position des Mehrschichtverbundes vorliegen. In einigen Ausführungsformen bildet die erfindungsgemäße Folie jedoch nicht eine der äußersten Schichten eines solchen Mehrschichtverbundes.

Vorzugsweise ist die Folie tiefziehbar.

Ferner ist die Folie vorzugsweise recyclebar, insbesondere vollständig recyclebar. Die Recyclingfähigkeit umfasst dabei vorzugsweise auch Verbunde, umfassend die Folie.

Das enthaltene thermoplastische Polymer ist im Wesentlichen nicht beschränkt.

Geeignete thermoplastische Polymere sind vorzugsweise ausgewählt aus der Gruppe, umfassend Polybutylensuccinate, Polybutylensuccinatadipate Polybutylenadipatterephthalate, thermoplastische Stärke, Polyhydroxybutyrate, Polyhydroxyalkanoate, Polymilchsäure, Cellulose Acetate, Polyetherimide, Polycarbonate, Polyphenylensulfone, Polyphenylenoxide, Polyethersulfone, Acrylnitril-Butadien-Styrol-Copolymerisate, Acrylnitril-Styrol-Acrylat-Copolymerisate, Polyvinylchlorid, Polyacrylate, Polyester, Polyamide, Polyaryletherketone, Polyether, Polyurethane, Polyimide, Polyamidimide, Polysiloxane, Polyolefine sowie Copolymere, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere enthalten.

Es ist bevorzugt, dass das mindestens eine thermoplastische Polymer mindestens ein thermoplastisches Elastomer umfasst und/oder zusätzlich enthält.

Geeignete thermoplastische Elastomere sind vorzugsweise ausgewählt aus der Gruppe, umfassend thermoplastisches Copolyamid (TPE-A), thermoplastisches Polyesterelastomer (TPE-E), thermoplastische Elastomere auf Olefinbasis (TPE-O), thermoplastische Polyethylene, thermoplastische Polypropylene, Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V).

Bevorzugt sind thermoplastische Elastomere mit niedrigem Schmelzflussindex, da mit diesen eine hohe Schmelzfestigkeit erreicht werden kann.

Der Schmelzflussindex liegt vorzugsweise im Bereich von 0,1 bis 30, insbesondere von 0,5 bis 5 g/10min (gemessen bei 190°C/2,16kg, gemäß DIN EN ISO 1133-1:2012-03).

Insbesondere bevorzugt sind thermoplastische Polypropylene, insbesondere Random-Copolymer Polypropylen, vorzugweise mit einem Schmelzflussindex zwischen 0,3 und 10 g/10min (gemessen bei 230°C/2,16kg, gemäß DIN EN ISO 1133-1:2012-03).

Es ist ferner bevorzugt, dass das mindestens eine thermoplastische Polymer einen Schmelzpunkt von weniger als, bzw. Schmelzbereich mit einem Beginn von weniger als 180°C, vorzugsweise von weniger als 170°C, insbesondere von weniger als 160°C oder weniger als 150°C, aufweist.

Vorzugsweise weisen alle in der Folie enthaltenen Polymere einen Schmelzpunkt von weniger als, bzw. Schmelzbereich mit einem Beginn von weniger als 180°C, vorzugsweise von weniger als 170°C, insbesondere von weniger als 160°C oder weniger als 150°C, auf.

Durch die Wahl von Polymeren mit derartigen Schmelzpunkten kann erreicht werden, dass die Prozesstemperatur zur Verarbeitung der Folie nicht so groß ist, dass sich die Korkpartikel verfärben.

Die Menge an enthaltenen Korkpartikeln ist im Wesentlichen nicht beschränkt, es ist jedoch bevorzugt, dass die Menge so gewählt wird, dass der Foliencharakter erhalten und die Folie tiefziehbar bliebt.

Es ist daher bevorzugt, dass die Korkpartikel in einer Menge von 1 bis 50 Gew.-%, vorzugsweise von 1 bis 30 Gew.-%, insbesondere von 1 bis 20 Gew.-%, bezogen auf das Gesamtgewicht der mindestens einen Schicht, in dieser vorliegen.

Solche Konzentrationen bzw. Mengen an Kork sind vorteilhaft, da sie das Tiefziehen der Folie ermöglichen und gleichzeitig ein Aufreißen der Folie verhindern.

In manchen Ausführungsformen ist es vorteilhaft, die Anbindung der Korkpartikel an die Polymermatrix in der mindestens eine Schicht zu verbessern.

Daher ist es dann bevorzugt, dass die mindestens eine Schicht mindestens einen Phasenvermittler umfasst, der die Anbindung der Korkpartikel an das mindestens eine thermoplastische Polymer verbessert.

Solche Phasenvermittler können beispielsweise ein Pfropfcopolymer umfassen, bei dem Maleinsäureanydrid auf Polypropylen, Polyethylen, Ethylvinylacetat, Acrylat, EPDM, PEO und/oder SEBS aufgepfropft wird.

Der Anteil an aufgepropften Maleinsäureanydrid liegt dabei vorzugsweise zwischen 0,1 und 3 Gew.-%, bezogen auf das Gesamtgewicht des Pfropfcopolymers.

Der Phasenvermittler ist vorzugsweise in einer Menge von 1 bis 5 Gew.-%, bezogen auf das Gesamtgewicht des mindestens einen Polymers enthalten.

Die erfindungsgemäße Folie ist ferner vorzugsweise dadurch gekennzeichnet, dass die Korkpartikel eine Partikelgröße von 0,01 bis 2 mm, vorzugsweise von 0,01 bis 0,6 mm, aufweisen.

Die Partikelgröße kann gemäß ISO 2030:2018:10 durch Korngrößenanalyse beim mechanischen Sieben bestimmt werden.

Die Korkpartikel können als reine Korkpartikel vorliegen oder in einer anderen Ausführungsform auch compoundiert vorliegen.

Bevorzugt liegen die Korkpartikel in Form eines Compounds, umfassend Korkpartikel und mindestens ein thermoplastisches Polymer, vorzugsweise ein thermoplastisches Elastomer, vor.

Das thermoplastische Polymer des Korkcompounds ist nicht beschränkt, jedoch vorzugsweise aus gewählt aus der Gruppe, umfassend Polybutylensuccinate, Polybutylensuccinatadipate, Polybutylenadipatterephthalate, thermoplastische Stärke, Polyhydroxybutyrate, Polyhydroxyalkanoate, Polymilchsäure, Cellulose Acetate, Polyetherimide, Polycarbonate, Polyphenylensulfone, Polyphenylenoxide, Polyethersulfone, Acrylnitril-Butadien-Styrol-Copolymerisate, Acrylnitril-Styrol-Acrylat-Copolymerisate, Polyvinylchlorid, Polyacrylate, Polyester, Polyamide, Polyaryletherketone, Polyether, Polyurethane, Polyimide, Polyamidimide, Polysiloxane, Polyolefine sowie Copolymere, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere enthalten.

Es ist bevorzugt, dass das mindestens eine thermoplastische Polymer des Korkcompounds mindestens ein thermoplastisches Elastomer umfasst und/oder zusätzlich enthält.

Geeignete thermoplastische Elastomere sind vorzugsweise ausgewählt aus der Gruppe, umfassend thermoplastisches Copolyamid (TPE-A), thermoplastisches Polyesterelastomer (TPE-E), thermoplastische Elastomere auf Olefinbasis (TPE-O), thermoplastische Polyethylene, thermoplastische Polypropylene, Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V).

Die entsprechenden Definitionen für diese Polymere sind analog zu denen, wie vorstehend für die mindestens eine Schicht ausgeführt.

Bevorzugt sind thermoplastische Polymere mit niedrigem Schmelzflussindex, da mit diesen eine hohe Schmelzfestigkeit erreicht werden kann.

Der Schmelzflussindex liegt vorzugsweise im Bereich von 0,1 bis 30, insbesondere von 0,5 bis 5 g/10min (gemessen bei 190°C/2,16kg, gemäß DIN EN ISO 1133-1:2012-03).

Insbesondere bevorzugt sind thermoplastische Polypropylene, insbesondere Random Copolymer Polypropylen, vorzugweise mit einem Schmelzflussindex zwischen 0,3 und 10 g/10min (gemessen bei 190°C/2,16kg, gemäß DIN EN ISO 1133-1:2012-03).

Besonders bevorzugt umfasst das thermoplastische Elastomer/Polymer des Korkcompounds das thermoplastische Elastomer/Polymer, das auch in der Folie eingesetzt wird.

Es ist ferner bevorzugt, dass die compoundierten Korkpartikel eine Partikelgröße von 0,01 bis 2 mm, vorzugsweise von 0,01 bis 0,6 mm, aufweisen.

Die Partikelgröße kann gemäß ISO 2030:2018:10 durch Korngrößenanalyse beim mechanischen Sieben bestimmt werden

Es ist bevorzugt, dass die Korkpartikel, außer einem möglichen Compoundieren, keiner Modifikation unterzogen werden.

Dadurch lassen sich Prozessschritte, wie z.B. bleichen, tränken, färben des Korks vermeiden, was zu einem vorteilhaften Product Carbon Footprint beiträgt.

In einigen Ausführungsformen ist es bevorzugt, die Korkpartikel vor der Compoundierung zu trocknen.

In einer Ausführungsform ist es bevorzugt, dass die mindestens eine Schicht Prozessstabilisatoren und/oder UV-Stabilisatoren umfasst.

Geeignete Prozessstabilisatoren umfassen beispielsweise phenolische Antioxidantien, aromatische Amine, Thiosynergisten, HALS, Hydroxymine, Benzofuranonderivate, Metalldeaktivatoren und/oder Phosphite.

Die Prozessstabilisatoren sind vorzugsweise in einer Menge von 0,01 bis 1 Gew.-%, bezogen auf das Gesamtgewicht des mindestens einen Polymers, enthalten.

Der Zusatz solcher Prozessstabilisatoren hat den Vorteil, dass Radikale welche während des Prozesses oder durch thermische Langzeitbelastung entstehen, werden abgefangen und können somit das Polymer nicht schädigen.

Geeignete UV-Stabilisatoren umfassen beispielsweise HALS (Hindered Amine Light-Stabilizers) und/oder UV-Absorber (zB. Hydroxybenzophenone und Hydroxyphenylbenotriazole etc).

Die UV-Stabilisatoren sind vorzugsweise in einer Menge von 0,01 bis 6 Gew.-%, bezogen auf den Polymeranteil, enthalten.

Der Zusatz solcher UV-Stabilisatoren hat den Vorteil, dass im Falle von UV Absorbern die Energie des einfallenden Lichts von dem UV Absorbiert wird und nicht von dem Polymer. Im Falle eines HALS reagiert ein z.B. durch UV Licht entstandenes Radikal mit dem HALS und das Polymer wird somit geschützt.

Die erfindungsgemäß Folie ist ferner vorzugsweise dadurch gekennzeichnet, dass die mindestens eine Schicht Pigmente umfasst.

Geeignete Pigmente umfassen sowohl organische als auch anorganische Pigmente des gesamten Farbspektrums, insbesondere dunkle Pigmente, beispielsweise Ruß und verschiede Metalloxide wie z.B. Eisenoxid oder Chrom-Eisenoxid. Es können hier sowohl organische Pigmente wie auch anorganische Pigment eingesetzt werden.

Die erfindungsgemäße Folie ist ferner vorzugsweise dadurch gekennzeichnet, dass die mindestens eine Schicht eine Dicke von 0,1 bis 3 mm, vorzugsweise von 0,3 bis 0,8 mm, aufweist.

Wie bereits erwähnt, kann die Folie einschichtig ausgebildet sein oder die vorstehend definierte mindestens eine Schicht kann Teil eines Mehrschichtverbundes sein.

In einer Ausführungsform ist auf einer Seite der mindestens einen Schicht eine weitere Schicht aufgebracht. Diese Schicht kann auch als Polymerschutzschicht bezeichnet werden. Diese Polymerschutzschicht kann direkt auf der vorstehend definierten mindestens einen Schicht aufgebracht sein oder über mindestens eine weitere Zwischenschicht, wie eine Primer- und/oder Lackschicht, mit der mindestens einen Schicht verbunden sein.

Diese weitere Schicht, die Polymerschutzschicht, ist vorzugsweise dadurch gekennzeichnet, dass sie mindestens ein Polymer, vorzugsweise ein Polypropylen, ein thermoplastisches Elastomer und/oder ein thermoplastisches Polyolefin umfasst.

Geeignete Polymere für die Polymerschutzschicht umfassen beispielsweise Polybutylensuccinate, Polybutylensuccinatadipate Polybutylenadipatterephthalate, thermoplastische Stärke, Polyhydroxybutyrate, Polyhydroxyalkanoate, Polymilchsäure, Cellulose Acetate, Polyetherimide, Polycarbonate, Polyphenylensulfone, Polyphenylenoxide, Polyethersulfone, Acrylnitril-Butadien-Styrol-Copolymerisate, Acrylnitril-Styrol-Acrylat-Copolymerisate, Polyvinylchlorid, Polyacrylate, Polyester, Polyamide, Polyaryletherketone, Polyether, Polyurethane, Polyimide, Polyamidimide, Polysiloxane, Polyolefine sowie Copolymere, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere enthalten.

Es ist bevorzugt, dass das mindestens eine thermoplastische Polymer der Polymerschutzschicht mindestens ein thermoplastisches Elastomer umfasst und/oder zusätzlich enthält.

Geeignete thermoplastische Elastomere sind vorzugsweise ausgewählt aus der Gruppe, umfassend thermoplastisches Copolyamid (TPE-A), thermoplastisches Polyesterelastomer (TPE-E), thermoplastische Elastomere auf Olefinbasis (TPE-O), thermoplastische Polyethylene, thermoplastische Polypropylene, Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V).

Bevorzugt sind thermoplastische Polymere mit niedrigem Schmelzflussindex, da mit diesen eine hohe Schmelzfestigkeit erreicht werden kann.

Der Schmelzflussindex liegt vorzugsweise im Bereich von 0,1 bis 30, insbesondere von 0,5 bis 5 g/10min (gemessen bei 190°C/2,16kg, gemäß DIN EN ISO 1133-1:2012-03).

Die mindestens eine Schicht kann in einer Ausführungsform auch nur mit einem Lack versehen sein, welcher vorzugsweise auf Polyurethan, Polyacrylat etc. basiert, und dann die Oberfläche des Verbundes darstellt.

Im Falle einer Schutzschicht, welche durch einen Lack realisiert wird, umfasst diese z.B. Polyurethane, Polyacrylaten oder auch Polyolefine, Polysiloxane, Silicone, oder Copolymere aus diesen oder besteht aus diesen.

Die entsprechenden Definitionen für diese Polymere sind analog zu denen, wie vorstehend für die mindestens eine Schicht ausgeführt.

Diese weitere Schicht, die thermoplastische Polymerschutzschicht, kann beispielsweise mittels Kleberkaschierung, thermischer Kaschierung und/oder Coextrusion mit der mindestens einen Schicht verbunden werden. Die Lackschutzschicht kann durch typische Auftragsverfahren appliziert, getrocknet und gehärtet werden wie z.B. Tiefdruckverfahren.

Es ist bevorzugt, dass die weitere Schicht, die Polymerschutzschicht, eine Härte im Bereich von Shore A 40 bis Shore D 80 (DIN ISO 868:2003-10) aufweist.

Es ist weiterhin bevorzugt, dass die weitere Schicht, die Polymerschutzschicht, Lichtschutzmittel umfasst.

Geeignete Lichtschutzmittel umfassen beispielsweise UV-Absorber und/oder HALS, insbesondere absorbierend im Bereich von 250 bis 400 nm. Z.B. Chimassorb, Tinuvin oder Uvinul Produkte (BASF).

Durch solche Lichtschutzmittel wird der Kork und die Polymere vor UV-Strahlung geschützt.

Prinzipiell kann die weitere Schicht, die Polymerschutzschicht, transparent, transluzent oder leicht pigmentiert sein. Vorzugsweise weist die Polymerschutzschicht Transmissionswerte von 0-80% bei 250-1000 nm, vorzugsweise von 0,5% - 80% im Bereich von 400-1000 nm auf.

Es ist bevorzugt, dass die weitere Schicht, die Polymerschutzschicht, so ausgestaltet ist, dass die mindestens eine Schicht, umfassend die Korkpartikel immer noch sichtbar bleibt.

Es ist insbesondere vorteilhaft in die weitere Schicht, die Polymerschutzschicht, Pigmente einzuarbeiten, insbesondere Pigmente, die in einem Bereich von 400 bis 700 nm absorbieren. Bevorzugte Pigmente sind im Farbbereich gelb, rot, grün, blau, schwarz und Abmischungen davon.

Die weitere Schicht, die thermoplastische Polymerschutzschicht, weist vorzugsweise eine Dicke von 0,025 bis 1 mm, vorzugsweise von 0,1 bis 0,8 mm, auf. Im Falle einer Lackschutzschicht liegt die Dicke vorzugsweise im Bereich 0,001 - 0,05 mm.

Wie vorstehend bereits ausgeführt, kann die weitere Schicht, die Polymerschutzschicht, direkt auf der vorstehend definierten mindestens einen Schicht aufgebracht sein oder über mindestens eine weitere Zwischenschicht, wie eine Primer- und/oder Lackschicht, mit der mindestens einen Schicht verbunden sein.

Vorzugsweise liegt zwischen der mindestens einen Schicht und der weiteren Schicht, der Polymerschutzschicht, eine zusätzliche Primer- und/oder Lackschicht vor.

Eine solche Primer- und/oder Lackschicht umfasst vorzugsweise mindestens ein Polyurethan, ein Polyacrylat und/oder ein Polyolefin und deren Copolymere sowie funktionelle Gruppen enthaltend.

Die Primer- und/oder Lackschicht kann beispielsweise als wässrige Dispersion, Lösungsmittel basierende oder als high solid System aufgetragen und ausgehärtet werden.

Es ist ferner bevorzugt, wenn diese Primer- oder Lackschicht Pigmente umfasst.

Geeignete Pigmente umfassen beispielsweise Titandioxid und/oder transparente Eisenoxidpigmente, aber auch andere organische und anorganische Pigmente sind möglich.

Vorzugsweise weist die Primer- oder Lackschicht Transmissionswerte von 0-80% bei 250-1000 nm, vorzugsweise von 0,5% - 80% im Bereich von 400-1000, nm auf. Die Mengen an geeigneten Pigmenten können vorzugsweise so gewählt werden, dass solche Transmissionswerte erreicht werden.

Weiterhin können auch in diese Primer- oder Lackschicht Lichtschutzmittel ,wie HALS und/oder UV-Absorber, der Reihen Uvinul, Tinuvin oder Chimassorb (BASF) eingearbeitet werden.

Als oberste Schicht der erfindungsgemäßen Folie wird häufig eine Oberstschicht aufgebracht, die üblicherweise eine Lackschicht ist. In einigen Ausführungsbeispielen kann auf die Lackschicht verzichtet werden wenn die thermoplastische Schutzschicht die dementsprechenden Eigenschaften mit sich bringt.

Diese Oberstschicht, vorzugsweise eine Lackschicht, ist insbesondere eine Schicht auf Basis von Polyurethan, Polyacrylat und/oder Polyolefin und derer Copolymere. Diese können vernetzt oder unvernetzt eingesetzt werden, um die Oberflächeneigenschaften, wie Glanzgrad, Kratzfestigkeit, Abrieb etc., einzustellen.

Es ist ferner möglich, dass die mindestens eine Schicht auf eine weitere Schicht, umfassend eine Schaumschicht offenzellig oder geschlossenzellig, auf Polymerbasis, aufgebracht wird. Diese kann auch zusätzliche Füllstoffe, auch bio basierte wie z.B. Kork enthalten.

Geeignete Polymere für die Schaumschicht umfassen beispielsweise Polybutylensuccinate, Polybutylensuccinatadipate Polybutylenadipatterephthalate, thermoplastische Stärke, Polyhydroxybutyrate, Polyhydroxyalkanoate, Polymilchsäure, Cellulose Acetate, Polyetherimide, Polycarbonate, Polyphenylensulfone, Polyphenylenoxide, Polyethersulfone, Acrylnitril-Butadien-Styrol-Copolymerisate, Acrylnitril-Styrol-Acrylat-Copolymerisate, Polyvinylchlorid, Polyacrylate, Polyester, Polyamide, Polyaryletherketone, Polyether, Polyurethane, Polyimide, Polyamidimide, Polysiloxane, Polyolefine sowie Copolymere, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere enthalten.

Es ist bevorzugt, dass das mindestens eine thermoplastische Polymer der Schaumschicht mindestens ein thermoplastisches Elastomer umfasst und/oder zusätzlich enthält.

Geeignete thermoplastische Elastomere sind vorzugsweise ausgewählt aus der Gruppe, umfassend thermoplastisches Copolyamid (TPE-A), thermoplastisches Polyesterelastomer (TPE-E), thermoplastische Elastomere auf Olefinbasis (TPE-O), thermoplastische Polyethylene, thermoplastische Polypropylene, Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V).

Bevorzugt sind thermoplastische Polymere mit niedrigem Schmelzflussindex, da mit diesen eine hohe Schmelzfestigkeit erreicht werden kann.

Der Schmelzflussindex liegt vorzugsweise im Bereich von 0,1 bis 30, insbesondere von 0,5 bis 5 g/10min (gemessen bei 190°C/2,16kg, gemäß DIN EN ISO 1133-1:2012-03).

Die entsprechenden Definitionen für diese Polymere sind analog zu denen, wie vorstehend für die mindestens eine Schicht ausgeführt.

Diese Schaumschicht bildet vorzugsweise eine untere Schicht, liegt also nicht auf der Seite der mindestens einen Schicht vor, auf der die Polymerschutzschicht und/oder die Lackschicht und/oder die Oberstschicht vorliegen.

Es ist ferner möglich, dass die mindestens eine Schicht auf eine weitere Schicht, umfassend eine Textilschicht, insbesondere Gewirke, Gestricke, Gewebe, Abstandgewirke, Vliese und Fleece oder Meltblown, auf Polymerbasis aufgebracht ist. Diese Textilschicht kann sowohl thermisch als auch über eine zusätzliche Klebeschicht mit der Folie verbunden werden.

Diese Textilschicht bildet vorzugsweise eine untere Schicht, liegt also nicht auf der Seite der mindestens einen Schicht vor, auf der die Polymerschutzschicht und/oder die Lackschicht und/oder die Oberstschicht vorliegen.

Geeignete Polymere für die Textilschicht umfassen beispielsweise Polybutylensuccinate, Polybutylensuccinatadipate Polybutylenadipatterephthalate, thermoplastische Stärke, Polyhydroxybutyrate, Polyhydroxyalkanoate, Polymilchsäure, Cellulose Acetate, Polyetherimide, Polycarbonate, Polyphenylensulfone, Polyphenylenoxide, Polyethersulfone, Acrylnitril-Butadien-Styrol-Copolymerisate, Acrylnitril-Styrol-Acrylat-Copolymerisate, Polyvinylchlorid, Polyacrylate, Polyester, Polyamide, Polyaryletherketone, Polyether, Polyurethane, Polyimide, Polyamidimide, Polysiloxane, Polyolefine sowie Copolymere, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere enthalten.

Es ist bevorzugt, dass das mindestens eine thermoplastische Polymer der Textilschicht mindestens ein thermoplastisches Elastomer umfasst und/oder zusätzlich enthält.

Geeignete thermoplastische Elastomere sind vorzugsweise ausgewählt aus der Gruppe, umfassend thermoplastisches Copolyamid (TPE-A), thermoplastisches Polyesterelastomer (TPE-E), thermoplastische Elastomere auf Olefinbasis (TPE-O), thermoplastische Polyethylene, thermoplastische Polypropylene, Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V).

Die entsprechenden Definitionen für diese Polymere sind analog zu denen, wie vorstehend für die mindestens eine Schicht ausgeführt.

Bevorzugt sind thermoplastische Polymere mit niedrigem Schmelzflussindex, da mit diesen eine hohe Schmelzfestigkeit erreicht werden kann.

Der Schmelzflussindex liegt vorzugsweise im Bereich von 0,1 bis 30, insbesondere von 0,5 bis 5 g/10min (gemessen bei 190°C/2,16kg, gemäß DIN EN ISO 1133-1:2012-03).

Wie vorstehend definiert, sind somit eine Vielzahl von möglichen Aufbauten der erfindungsgemäßen Folie, bzw. von Verbunden umfassend die erfindungsgemäße Folie, möglich.

Bevorzugt sind folgende ein Aufbauten (von unten nach oben):
Schaumschicht - korkhaltige Folie - Lack- und/oder Primerschicht - Polymerschutzschicht - Oberstschicht (Lackschicht).
Korkhaltige Folie - Lack- und/oder Primerschicht - Polymerschutzschicht - Oberstschicht (Lackschicht).
Schaumschicht - korkhaltige Folie - Polymerschutzschicht - Oberstschicht (Lackschicht).
Korkhaltige Folie - Polymerschutzschicht - Oberstschicht (Lackschicht).
Korkhaltige Folie - Polymerschutzschicht als Oberstschicht
Textilschicht - korkhaltige Folie - Lack- und/oder Primerschicht - Polymerschutzschicht - Oberstschicht (Lackschicht).
Textilschicht - korkhaltige Folie -Oberstschicht (Lackschicht).
Textilschicht - Klebeschicht- korkhaltige Folie -Oberstschicht (Lackschicht).

Die erfindungsgemäße Folie, bzw. ein Mehrschichtverbund, kann nach den üblichen Verfahren wie z.B. Kalandrieren, Extrudieren, Co-Extrudieren hergestellt werden. Des Weiteren kann die Folie durch thermisches Kaschieren oder Klebekaschieren mit dem Schaum oder Textil verbunden werden. Die Lackschichten werden durch Rotogravur, Siebdruck, Tiefdruck, Rakel und Gießverfahren aufgetragen.

Die vorliegende Erfindung betrifft ferner die Verwendung der vorstehend beschriebenen Folie in einem Automobilinnenraum, im Automobilexterieur, als Möbelfolie, für Wandpanele, für Fassaden, zur Bepolsterung im Innen und Außenbereich, für Bodenbeläge, und auch in verschiedenen weiteren Industriebereichen.

Insbesondere betrifft die erfindungsgemäße Verwendung die vorstehend beschriebene Folie in einer Tiefziehanwendung (positiv oder negativ).

Insgesamt zeichnen sich die erfindungsgemäßen Folien durch folgende Punkte aus:
- Tiefziehbarkeit, ohne dass Korkpartikel die Oberflächenhaptik stören,
- Tiefziehbarkeit, ohne Aufreißen der Folie/Oberfläche,
- Dekorfolienverbund mit Korkpartikeln, der Ausbleichen des Korks, insbesondere im Vergleich mit Korkfurnier, signifikant verbessert bis ganz verhindert,
- keine substantielle Vorbehandlung des Korks notwendig,
- nachhaltige Optik,
- schnelle, einfache und wirtschaftliche Massenfertigung möglich,
- schnelle, einfache und wirtschaftliche Massenfertigung bei der Anwendung auf Automobilbauteilen oder Bauteile anderer Industrieanwendungen durch Tiefziehbarkeit möglich,
- Recyclefähigkeit der Folie und die jeweiligen Folienverbunde
- Abfälle aus der Korkproduktion können wirtschaftlich weiterverwertet werden.

Die nachfolgende Erfindung wird anschließend anhand von Beispielen und Figuren näher erläutert. Diese dienen lediglich der Illustration der Erfindung, sind jedoch in keiner Weise beschränkend.

### Beispiele

### Beispiel 1:

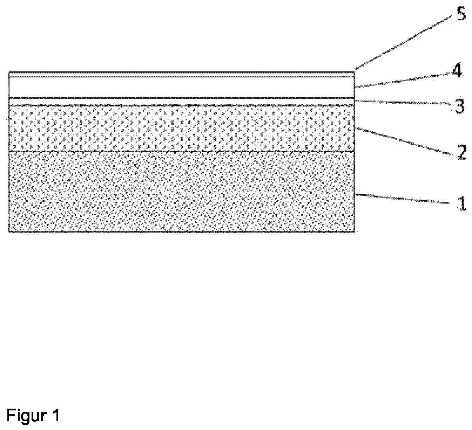

In Figur 1 ist ein beispielhafter Aufbau einer erfindungsgemäßen Folie beschrieben.

Diese Folie umfasst eine unterste Schicht in Form einer Schaumschicht (1), welche optional ist. Auf dieser Schicht ist die mindestens eine Schicht, umfassend mindestens ein thermoplastisches Polymer und Korkpartikel aufgebracht (2). Auf der Schicht (2) kann optional eine Lack und/oder Primerschicht (3) aufgetragen werden. Auf der optionalen Schicht (3) ist eine Polymerschutzschicht (4) aufgetragen. Als Oberstschicht (5) wird in der Regel eine Lackschicht aufgetragen. Diese kann bis zu fünf einzelne Lackschichten umfassen.

### Beispiel 2:

Nachfolgend wir der Aufbau verschiedenster erfindungsgemäßer Folienverbunde beispielhaft aufgezeigt.

Die einzelnen Schichten weisen dabei die in Tabelle 1 aufgeführten Zusammensetzungen auf (Mengen in [phr]).

**Tabelle 1: Polyolefin basierte Folien**

| | **Korkschicht 1** | **Schutzschicht 1** | **Korkschicht 2** | **Schutzschicht 2** | **Korkschicht 3** |
|---|---|---|---|---|---|
| | | | | | |
| **PP (random CoPo)** | 60 | 80 | 30 | 40 | 60 |
| **Korkcompound** | 30 | - | 30 | - | 40 |
| **TPO** | 10 | - | - | - | |
| **TPE** | - | 20 | 40 | 60 | - |
| **Phosphit** | 0,1 | 0,1 | 0,1 | 0,1 | 0,1 |
| **Phenolischer AO** | 0,2 | 0,2 | 0,2 | 0,2 | 0,2 |
| **UV Absorber** | 0,2 | 0,4 | 0,2 | 0,4 | 0,2 |
| **HALS** | 0,2 | 0,2 | 0,2 | 0,2 | 0,2 |
| **Pigment** | 2 | - | 2 | - | 2 |

Aufbau 1:
   Korkschicht 1 (Dicke 0,6 mm) - Schutzschicht 1 (Dicke 0,4mm) - Lack
Aufbau 2:
   Korkschicht 2 (Dicke 0,35 mm ) - Schutzschicht 2 (Dicke 0,05mm) - Lack
Aufbau 3
   Korkschicht 3 (0.8mm) - Lack

Alle Folien(verbunde) gemäß Aufbau 1, 2 oder 3 weisen hervorragende Tiefzieheigenschaften auf und sind vollständig recyclebar.

### Beispiel 3:

Nachfolgend wir der Aufbau verschiedenster erfindungsgemäßer Folienverbunde beispielhaft aufgezeigt.

Die einzelnen Schichten weisen dabei die in Tabelle 2 aufgeführten Zusammensetzungen auf (Mengen in [phr]).

**Tabelle 2: TPU basierte Folien**

| | **Korkschicht 1** | **Schutzschicht 1** | **Korkschicht 2** | **Schutzschicht 2** | **Korkschicht 3** | **Schutzschicht 3** |
|---|---|---|---|---|---|---|
| | | | | | | |
| **TPU (aliphatisch, Polyether, Shore 60D)** | 70 | 100 | 40 | 60 | - | 60 |
| **TPU (aliphatisch, Polyester, Shore 65A)** | | - | 40 | 40 | - | 40 |
| **TPU (aromatisch, Polyester, Shore 60A)** | - | - | - | - | 80 | - |
| **Korkcompound** | 30 | - | 20 | - | 20 | - |
| **Phosphit** | - | - | - | - | - | - |
| **Phenolischer AO** | - | - | - | - | - | - |
| **UV Absorber** | 0,2 | 0,6 | 0,2 | 0,6 | 0,2 | 0,6 |
| **HALS** | 0,2 | 0,2 | 0,2 | 0,2 | 0,2 | 0,2 |
| **Pigment** | 2 | - | 2 | - | 2 | 0,2 |

Aufbau 1
   Korkschicht 1 (Dicke 0,6mm) -Schutzschicht 1 (Dicke 0,4mm ) - Lack
Aufbau 2
   Korkschicht 2 (Dicke 0,6mm) -Schutzschicht 2 (Dicke 0,2 mm) - Lack
Aufbau 3
   Korkschicht 3 (Dicke 0.35mm) -Schutzschicht (Dicke 0,1mm) - Lack

Alle Folien(verbunde) gemäß Aufbau 1, 2 oder 3 weisen hervorragende Tiefzieheigenschaften auf und sind vollständig recyclebar.

## Patentansprüche

1. Folie, umfassend mindestens eine Schicht, wobei die mindestens eine Schicht mindestens ein thermoplastisches Polymer und Korkpartikel umfasst.

2. Folie gemäß Anspruch 1, **dadurch gekennzeichnet, dass** das mindestens eine thermoplastische Polymer mindestens ein thermoplastisches Elastomer umfasst.

3. Folie gemäß irgendeinem der vorhergehenden Ansprüche, **dadurch gekennzeichnet, dass** das mindestens eine thermoplastische Polymer einen Schmelzpunkt von weniger als 180°C aufweist.

4. Folie gemäß irgendeinem der vorhergehenden Ansprüche, **dadurch gekennzeichnet, dass** die Korkpartikel in einer Menge von 1 bis 50 Gew.-%, vorzugsweise von 1 bis 30 Gew.-%, insbesondere von 1 bis 20 Gew.-%, bezogen auf das Gesamtgewicht der mindestens einen Schicht, in dieser vorliegen.

5. Folie gemäß irgendeinem der vorhergehenden Ansprüche, **dadurch gekennzeichnet, dass** die mindestens eine Schicht mindestens einen Phasenvermittler umfasst, der die Anbindung der Korkpartikel an das mindestens eine thermoplastische Polymer verbessert.

6. Folie gemäß irgendeinem der vorhergehenden Ansprüche, **dadurch gekennzeichnet, dass** die Korkpartikel eine Partikelgröße von 0,01 bis 2 mm, vorzugsweise von 0,01 bis 0,6 mm, aufweisen.

7. Folie gemäß irgendeinem der vorhergehenden Ansprüche, **dadurch gekennzeichnet, dass** die Korkpartikel in Form eines Compounds, umfassend Korkpartikel und mindestens ein thermoplastisches Polymer, vorliegen.

8. Folie gemäß irgendeinem der vorhergehenden Ansprüche, **dadurch gekennzeichnet, dass** die mindestens eine Schicht Prozessstabilisatoren, vorzugsweise phenolische Antioxidantien und/oder Phosphite, und/oder UV-Stabilisatoren umfasst.

9. Folie gemäß irgendeinem der vorhergehenden Ansprüche, **dadurch gekennzeichnet, dass** die mindestens eine Schicht Pigmente umfasst.

10. Folie gemäß irgendeinem der vorhergehenden Ansprüche, **dadurch gekennzeichnet, dass** die mindestens eine Schicht eine Dicke von,0,1 bis 3 mm, aufweist.

11. Folie gemäß irgendeinem der vorhergehenden Ansprüche, **dadurch gekennzeichnet, dass** auf einer Seite der mindestens einen Schicht eine weitere Schicht aufgebracht wird.

12. Folie gemäß Anspruch 11, **dadurch gekennzeichnet, dass** die weitere Schicht mindestens ein Polymer, vorzugsweise ein thermoplastisches Polymer, umfasst.

13. Folie gemäß Anspruch 11 oder 12, **dadurch gekennzeichnet, dass** die weitere Schicht eine Härte im Bereich von Shore A 40 bis Shore D 80 aufweist.

14. Folie gemäß irgendeinem der vorhergehenden Ansprüche, **dadurch gekennzeichnet, dass** die Folie eine oberste Schicht aufweist, wobei diese oberste Schicht vorzugsweise eine Lackschicht und/oder eine Primerschicht ist.

15. Verwendung einer Folie gemäß irgendeinem der Ansprüche 1 bis 14 in einem Automobilinnenraum, insbesondere für Tiefziehanwendungen, in einem Automobilinnenraum, im Automobilexterieur, als Möbelfolie, für Wandpanele, für Fassaden, zur Bepolsterung im Innen und Außenbereich und/oder für Bodenbeläge.
